# EUROPEAN PATENT SPECIFICATION

(11) **EP 3 836 782 B1**
(45) Date of publication and mention of the grant of the patent: **14.01.2026**
(21) Application number: 18928542.2
(22) Date of filing: 26.11.2018
(51) Int. Cl.: A01M 1/02, A01M 1/06, A01M 1/08

(54) **AN ECO-FRIENDLY MOSQUITO CONTROL SYSTEM**
UMWELTFREUNDLICHES SYSTEM ZUR BEKÄMPFUNG VON MÜCKEN
SYSTÈME ÉCOLOGIQUE DE LUTTE CONTRE LES MOUSTIQUES

(30) Priority: 01.08.2018 UA 201808394
(43) Date of publication of application: 23.06.2021
(73) Proprietor: Romanova, Anastasiia Romanivna, Kherson, 73002 (UA); Mushakov, Andriy Valeriyovych, Kherson, 73035 (UA)
(72) Inventor: Romanova, Anastasiia Romanivna, Kherson, 73002 (UA); Mushakov, Andriy Valeriyovych, Kherson, 73035 (UA)
(74) Representative: Riccardi, Sergio
(86) International application number: PCT/UA2018/000126
(87) International publication number: WO 2020/027761

(56) References cited:
- WO-A1-2018/008923
- KR-A- 20140 105 679
- UA-A- 201 808 394
- US-A1- 2004 139 648
- US-A1- 2011 030 266
- US-A1- 2014 075 824
- US-A1- 2014 075 824
- US-A1- 2017 231 210
- US-A1- 2018 125 052
- US-B2- 8 705 017

## Description

The present invention is intended to reduce the population of insects in the open area by means of attracting, trapping and extermination. A relevant prior art document in the field is for example: US2004/139648A1.

Known inventions for example use methods for attracting blood-sucking arthropods, especially insects and arachnids. They are particularly attracted by CO2. Arthropods can be captured and kept and /or killed in a catching device. At least one liquid or solid organic material reacts to the oxidation process for CO2 formation. In particular, the term "organic matter" is used to describe an organic substance or a mixture of organic compounds.

According to the invention, in the process of oxidation the substance reacts as follows: one part of the substance is completely oxidized, and the other part is oxidized partially. The product of partial oxidation increases the specific effect of the attractant mixture. Also, the heat generated during the oxidation process is another positive factor in attracting insects.

The known mosquito device consists of a case, a heater, a fan, a grating and means for spreading of flying attractant. The case has a coating that imitates human skin. Gratings are fixed between the three flanges. Means for spreading of flying attractant are made in the form of a container with carbon dioxide and a CO2 regulator.

The container is connected to the outlet of the CO2 regulator. The container has a replaceable cartridge with Octenol.

The disadvantages of the given device are limited operation coverage on the territory, vulnerability to external influences, the need for constant human participation in device maintenance services.

The object of the invention is to improve device characteristics for attracting insects by means of complex interaction of all attractive components, as well as improving the operational qualities of the device.

To solve the problem, the eco-friendly mosquito control system including a case, a heater, a fan, a net and means for spreading of flying attractant, additionally contains light emitters, a nozzle for spraying gas mixture and vapor, a container for odorant, a control panel with a screen, protective grids, solar panel elements, wheel, unit of electronic elements, interactive panel, panoramic camera, LTE/GSM and Wi-Fi modules. The trap has a main housing, an internal CO2 system, a high-strength metal enclosure, protected from atmospheric influences, high suction power, allowing to increase the operating range of the trap, compared to the analogues. Internal processor and remote-control system allow to control the devices connected to the ecosystem.

The object of the present invention is illustrated in the given drawings, wherein:

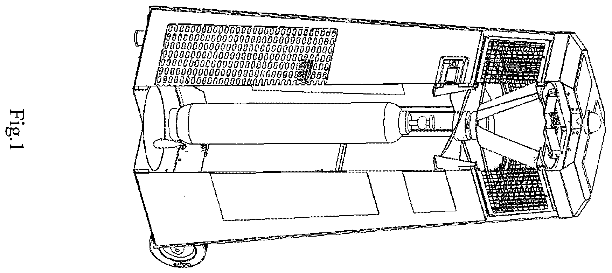

Fig. 1 shows a perspective view;

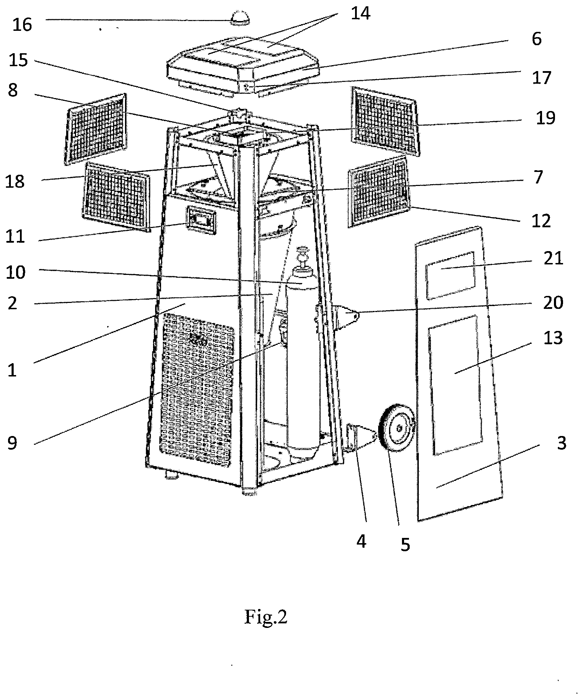

Fig. 2 shows the general view in parts.

The present invention relates to the eco-friendly mosquito control system for public areas, which has a case, a container for collecting insects 2, service doors 3, wheels bracket 4, wheels 5, a decorative cover 6, a fan with a protective mesh 7, a unit of electronic elements 8, an odorant reservoir 9, a CO2 cylinder 10, a control panel with a screen 11, a protective net 12, interactive panel 13, solar battery elements 14, LTE / GSM modules 15, a panoramic camera 16, a nozzle for spraying gas mixture and vapor 17, light emitters 18, Wi-Fi module 19, mounting for municipal lamp posts 20, a heating element 21.

The device works as follows: immediately after the device is turned on, electronic elements 8 in a certain sequence start operating and light emitters 18 are switching on. Following the release of the natural gas - pre-saturated with odorant, attractant lures insects that are caught by the air stream, which catches insects and moves those into a container for keeping and disposal.

The insects are attracted by simulating the processes of human and animal life: the allocation of heat, carbon dioxide, odor, imitation of breathing. Light, sound effects and vapor separation are also used to lure insects. The electromechanical control system is based on the principle of attracting insects, catching and destroying those to reduce the population in certain areas. Insects, following their instincts while searching for food, are lured to a device simulating a living organism, emitting heat, carbon dioxide, odor, steam, light.

The system is absolutely safe and environmentally neutral due to the metal case.

The device can be connected to the unlimited number of systems with a single control center through communication channels that might control large ecosystems / be connected to Smart devices.

Sensors and software provide maximum performance of the device depending on the climate, time of day and meteorological conditions.

The device is intended for use in large areas - ecosystems. Can be mounted on municipal lamp posts due to specialized fastening.

The unit has an option of autonomous power supply from solar panels that along with energy accumulator allows to carry out military operations and use the device in places with no access to the network.

The system for monitoring of the environment can be integrated optionally.

The device is equipped with data and information transmission system; receiving the internet from the operator and distributing via Wi-Fi.

The device is provided for the installation of advertising panels.

The technical solution offered is aimed at increase of device characteristics for luring insects due to the complex interaction of all attractive components, as well as improving the operational qualities of the device.
Formula

An eco-friendly mosquito control system has a case, a heater, a fan, a net and means for spreading of flying attractant, additionally contains light emitters, a nozzle for spraying gas mixture and vapor, a container for odorant, a control panel with a screen, protective grids, solar panel elements, wheels, unit of electronic elements, interactive panel, panoramic camera, LTE/GSM and Wi-Fi modules, mounting for municipal lamp posts.

## Claims

1. A mosquito control system comprising
a case, a heater (21), a fan (7),
and means for spreading of attractant,
and additionally containing light emitters (18),
a nozzle for spraying gas mixture and vapor (17),
a container for odorant (9), a control panel with a screen (11),
protective net (12), solar panel elements (14), wheels (4),
unit of electronic elements (8), interactive panel (13),
panoramic camera (16), LTE/GSM and Wi-Fi modules (15 and 19),
mounting for posts,
the case having the shape of a pyramid trunk and having a larger lower portion and a narrower upper portion,
said upper portion including:
- on the external surface said protective net (12), said nozzle for spraying gas mixture and vapor (17), and,
- inside, said light emitters (18) so as to lure insects, and said fan (7),
said lower portion including a container for collecting insects (2) and a C0₂ cylindric reservoir (10).

## Patentansprüche

1. Ein Mückenbekämpfungssystem, bestehend aus
einem Gehäuse, einem Heizer (21), einem Gebläse (7),
und Mitteln zum Verteilen eines Lockmittels,
das zusätzlich Lichtemitter (18),
eine Düse zum Versprühen von Gasgemisch und Dampf (17),
einen Behälter für Duftstoff (9), ein Bedienfeld mit Bildschirm (11),
ein Schutzgitter (12), Solarzellen (14), Räder (4),
eine elektronische Bauteileinheit (8), ein interaktives Feld (13),
eine Panoramakamera (16), LTE/GSM- und Wi-Fi-Module (15 und 19)
und eine Halterung für Pfosten beinhaltet,
wobei das Gehäuse die Form eines Pyramidenstumpfes hat und einen breiteren unteren Teil und einen schmaleren oberen Teil aufweist,
wobei der genannte obere Teil Folgendes umfasst:
- auf der Außenfläche das genannte Schutzgitter (12), die genannte Düse zum Versprühen von Gasgemisch und Dampf (17) und
- im Inneren die genannten Lichtemitter (18) zum Anlocken von Insekten sowie das genannte Gebläse (7),
wobei der genannte untere Teil ein Behältnis zum Auffangen von Insekten (2) und einen zylindrischen CO₂-Behälter (10) umfasst.

## Revendications

1. Système de régulation des moustiques, comprenant
un boîtier, un appareil de chauffage (21), un ventilateur (7),
et des moyens pour l'épandage d'appâts,
et contenant en plus des émetteurs de lumière (18),
une buse pour la pulvérisation de mélanges gazeux et de vapeurs (17),
un conteneur de matières odorantes (9), un panneau de commande avec un écran (11),
un filet de protection (12), des éléments de panneaux solaires (14), des roues (4),
une unité d'éléments électroniques (8), un panneau interactif (13),
une caméra panoramique (16), des modules LTE/GSM et Wi-Fi (15 et 19),
un support pour des poteaux,
le boîtier ayant la forme d'un tronc de pyramide et ayant une partie inférieure plus grande et une partie supérieure plus étroite,
ladite partie supérieure incluant :
- sur la surface extérieure ledit filet de protection (12), ladite buse pour la pulvérisation de mélanges gazeux et de vapeurs (17), et,
- en son sein, lesdits émetteurs de lumière (18) de manière à attirer les insectes, et ledit ventilateur (7),
ladite partie inférieure incluant un conteneur pour la collecte d'insectes (2) et un réservoir cylindrique de CO₂ (10).
